# EUROPEAN PATENT SPECIFICATION

(11) **EP 4 572 947 B1**
(45) Date of publication and mention of the grant of the patent: **21.10.2026**
(21) Application number: 23758742.3
(22) Date of filing: 17.08.2023
(51) Int. Cl.: B29C 65/08, B29C 65/72, B29C 65/52, B29C 65/48, B29L 31/00

(54) **METHOD AND DEVICE FOR LAMINATING TWO POLYMERIC COMPONENTS**
VERFAHREN UND VORRICHTUNG ZUM KASCHIEREN ZWEIER POLYMERER BAUTEILE
MÉTHODE ET DISPOSITIF DE STRATIFICATION DE DEUX COMPOSANTS POLYMÈRES

(30) Priority: 17.08.2022 NL 2032773
(43) Date of publication of application: 25.06.2025
(73) Proprietor: Bondus Technologies B.V., 8024 AA Zwolle (NL)
(72) Inventor: HOOGENBERG, Bas-Jan, 8022 AW Zwolle (NL); EIJPE, Sven Wouter, 8022 AW Zwolle (NL)
(74) Representative: Arnold & Siedsma
(86) International application number: PCT/NL2023/050426
(87) International publication number: WO 2024/039244

(56) References cited:
- JP-A- 2000 048 785
- US-A1- 2008 178 987
- US-A1- 2012 288 672

## Description

The present invention relates to a method for laminating at least two polymeric components, a device for laminating at least two polymeric components.

Conventional polymer connection methods with a high throughput include the use of intermediate layers or welding methods based on the generation of heat through friction. The latter includes ultrasonic welding and linear friction welding, in which polymers are heated above the glass-transition temperature (Tg) of the material on the interface such that mixing of the polymers occurs on the interface. Said conventional methods include compressing of the compounds comprising the polymer, thus mixing of the polymers is performed whilst compressing. This causes deformations of the product and the flow of molten polymer can diffuse/translate to undesired locations.

Alternatively, intermediate layers may be used to connect polymers. Said intermediate layers include for example glue and/or tape. A drawback of an intermediate layer is that it affects the accuracy, as a tolerance on said intermediate layer is added. Furthermore, said intermediate layers may affect the functionally of the product, for example affecting biocompatibility or optical properties. As a result, poor functional properties and a low accuracy are achieved.

Other conventional method for bonding of polymers may include thermal bonding using plasma treatments. Such method provides a temperature below the glass-transition temperature to prevent deformation. However, the cycle time is extremely long due to the heating of the whole part and even more due to the slow diffusion-based intertwining of polymer chains. Moreover, the realized bonding strength can be poor.

US 2008/178987 A1 discloses a method for making a polymeric microfluidic structure in which two or more components (layers) of the microfluidic structure are fixedly bonded or laminated with a weak solvent bonding agent, particularly acetonitrile or a mixture of acetonitrile and alcohol.

JP 2000 048785 A discloses the manufacturing of a battery pack wherein a battery and a wiring circuit are provided in split-type resin, and the surfaces are joined opposite to each other of the split-type battery pack.

US 2012/288672 A1 discloses a method of producing a microstructured device, as well as a method of processing a microstructured substrate to heal surface defects therein, a method of bonding substrates and healing surface defects in a substrate, and microstructured devices produced by these methods.

These problems prevent an efficient and effective bonding/laminating of at least two polymeric components. This problem is even bigger for large scale manufacturing as elongation times and/or long cycle times prevent high throughput.

The present invention aims at obviating or at least reducing the aforementioned problems and to enable efficient and effective method for laminating/bonding at least two polymeric components.

This objective is achieved with the method for laminating at least two polymeric components as defined in claim 1.

It is noted that throughout this application the solvent is a liquid, unless otherwise stated. In a preferred embodiment, the solvent is a liquid. Thus, in the preferred embodiment the solvent is not vapour.

The method according to the invention is particularly suitable for laminating at least two polymeric components of a microfluidic device. In other words, the method according to the invention is particularly suitable for manufacturing of a microfluidic device.

The method according to the invention may start with the step of providing at least two polymeric components, each component having at least one connecting surface. Said step may be followed by the step of providing a solvent to at least one of the at least one connecting surfaces.

Providing the solvent to at least one of the at least one connecting surfaces enables the formation of an interface layer, wherein the interface layer may be a mixture of the polymer of one of the at least two polymeric components and the solvent. It was found that said interface layer (also referred to as intermediate layer) is softer compared to the polymeric component, due to swelling of the interface layer by the solvent.

After the step of providing a solvent, the step of securing the connecting surface of a first polymeric component to the connecting surface of a second polymeric component, wherein the at least one connecting surface provided with the solvent is the connecting surface of the first polymeric component and/or the second polymeric component may be performed. In other words, the step of securing includes securing the connecting surface of a first polymeric component of the at least two polymeric components to the connecting surface of a second polymeric component of the at least two polymeric components.

The step of securing may be performed prior to evaporation of the solvent, such that a liquid layer remains encapsulated on the at least one connecting surface and/or such that a liquid layer remains encapsulated between the at least two connecting surfaces.

The step of bonding the connecting surfaces of the first and second polymeric component may be performed separately (after) or simultaneously with the step of applying ultrasonic energy.

The method according to the invention enables that the solvent migrates into the polymer of the at least one connecting surface, causing a swollen and more viscous interface layer. This ensures that, at the step of applying ultrasonic energy, the at least one connecting surface is already viscoelastic and thus the viscoelastic heating regime as applies on the contacting surfaces of the at least two polymeric components. Thus, the method according to the invention enables uniform heating. The solvent provided to at least parts of the at least one connecting surface causes a reduction of the glass transition temperature of the polymer of the at least one connecting surface (also referred to as intermediate layer when solvent is applied to the connecting surface), while the glass transition temperature of the majority of the polymeric component remains substantially unchanged. Therefore, the step of applying ultrasonic energy uses less energy, and thus a lower temperature, compared to conventional methods. As a result, an efficient and effective lamination of at least two polymeric components is achieved, wherein the (structures of the) polymeric components will substantially not lose integrity at the temperature during the step of applying ultrasonic energy. In addition, the interface layer (which is swollen) ensures a good contact surface by allowing compression of micro-scale topology differences.

An advantage of the method according to the invention is that the step of providing a solvent to at least one of the at least one connecting surfaces enables to selectively apply the solvent. As a result, the two surfaces may be bonded at the desired locations. Preferably, said desired locations are the locations where solvent has selectively been applied.

In addition, the method according to the invention enables to provide the solvent to a at least one of the at least one connecting surfaces in an accurate manner. In combination with the characteristics (such as boiling point and/or molecular weight) of the solvent enables to connect the polymeric surfaces in a highly accurate manner.

Furthermore, the method according to the invention enables a high accuracy of bonding of the connecting surfaces of the first and second polymeric component and/or low compression of micro structures. Therefore, a well defined product may be achieved.

It was found that the cycle-time of the method according to the invention is low. In fact, in a preferred embodiment the cycle time of the method according to the invention is in the range of 100 milliseconds to 20 seconds, preferably in the range of 175 milliseconds to 10 seconds, more preferably in the range of 250 milliseconds to 3 seconds.

Yet another advantage of the method according to the invention is that, due to the use of a solvent having a Ra-distance with respect to the polymeric component in the range of 4 MPa^{1/2} to 10 MPa^{1/2}, a strong solvent is avoided. Therefore, the safety for an operator is increased. Furthermore, due to the enablement of the use of a solvent having a Ra-distance with respect to the polymeric component in the range of 4 MPa^{1/2} to 10 MPa^{1/2} is that a more environmentally friendly method may be achieved compared to conventional methods for laminating at least two polymeric components.

The method according to the invention further enables a cycle time in the range of 0.1 second to 3 minutes. Therefore, in a preferred embodiment, the cycle time of the method according to the invention is in the range of 0.1 second to 3 minutes, preferably in the range of 0.2 second to 2 minutes, more preferably in the range of 0.2 second to 30 seconds, even more preferably in the range of 0.2 second to 3 seconds.

Yet a further advantage of the method according to the invention is that the strength between the two polymeric components is sufficient for use in a microfluidic device. In fact, the bonding strength is better compared to conventional methods. As a result, a wide range of functional properties is provided.

Yet a further advantage of the method according to the invention is that flash material, which is normally pushed out sideways from between the polymeric components, is substantially prevented. Therefore, the formation of (mechanical) structures close/adjacent to the energy sources are prevented.

It is noted that flash material refers to the material which is in excess and may pour from the edge between the secured polymeric components.

The solvent is preferably selected for the (target) polymer (i.e. the polymer of the polymeric component), wherein the solvent is subordinate to the polymer. Preferably, the solvent is chemically alike. In other words, the solvent is chemically comparable.

To select the solvent, the Hansen Solubility Parameters (HSP) is applied. The HSP uses three parameters to describe both the solvent and the polymer. Said parameters are dispersion (δD), polar (δP), and hydrogen bonding (δH), and are defined in mega Pascal to ½ (MPa^{1/2}).

The parameters can be calculated for solvent mixtures by calculating the weighted averages for the three parameters, and multiplying the parameter values of each solvent with the %-content of that solvent.

Together, these parameters describe the cohesive energy density. To achieve the desired solvability, all three parameters of the solvent are preferably close to said (three) parameters of the polymer. The measure of how 'close' or what the distance between the parameters of the solvent and the polymer is, may be calculated by Equation 1. Equation 1 indicates a distance calculation in 3D space using 3D Pythagoras' rule. The dispersion parameter is multiplied by a factor in the rang of 2 to 6, preferably in the range of 3 to 5, more preferably 3.5 to 4.5, even more preferably about 4, which is based on experimental results. In addition, solvent parameters are indicated with subscript 's', and polymer parameters are indicated with subscript 'p'. ${Ra}^{2} = 4 {\left({δD}_{s}-{δD}_{p}\right)}^{2} + {\left({δP}_{s}-{δP}_{p}\right)}^{2} + {\left({δH}_{s}-{δH}_{p}\right)}^{2}$ Equation 1

Thus, the Ra-distance defines the relation between the solvent and the polymer. It is noted that the Ra-distance will be substantially zero for the best solvent, where a poor combination between solvent and polymer may be higher than 30. It was found that a suitable solvability is considered being a Ra-distance in the range of 4 MPa^{1/2} to 10 MPa^{1/2}.

In a preferred embodiment, the bonding of heterogenous polymeric components, thus bonding two polymeric components existing of different polymers, the solvent may be tailored such that the Ra-distance is within the desired range for both polymers with respect to the solvent.

Furthermore, it was found that the temperature may affect the HSP, since applying ultrasonic energy may cause a temperature increase of the interface between the connecting surfaces. Both the polymer as well as the solvent may experience temperature elevation. The influence of the temperature on the Ra-distance may be addressed using Equation 2 A to C. $δDT = δD ∗ \left(1-ΔT∗α∗1.25\right)$ Equation 2A $δPT = δP ∗ \left(1-ΔT∗α/2\right)$ Equation 2B $δHT = δH ∗ \left(1-ΔT∗\left(0.00122+α/2\right)\right)$ Equation 2C

The resulting HSP values are always lower at higher temperatures, but since polymers have a much higher coefficient of thermal expansion (α), the effect is stronger for polymers. Hence, depending on the HSP of the solvent, the Ra-distance may be both shorter or longer at an elevated temperature. Preferably, the solvent is selected such that the Ra-distance is lower, in order to promote dissolution at the elevated temperature. This effect is on top of the effect that dissolution rate generally increases with increased temperature. Thus, the Ra-distance is lower at elevated temperatures compared to lower temperatures.

In addition, the molecular weight of the solvent may influence the dissolution rate. For example, a higher molecular weight of the solvent also equals a higher boiling point (for organic compounds). The boiling points of solvents may be used to have an indication of the volatility, thus how quickly the solvent will evaporate. With a lower evaporation rate, it is easier to apply a metered and localized solvent layer, without evaporation of the solvent prior to bonding. Here, the lower volatility is thus a practical aspect (more time) as well as an improvement in accuracy on the application of the solvent.

Furthermore, the diffusion coefficient of the solvent is lower for solvents with a molecular weight. It is noted that that the diffusion coefficient substantially linearly reduces with a higher molecular weight. A higher molecular weight will thus result in lower diffusion, hence slower swelling of the polymer by the solvent (at room temperature). Nevertheless, during the heating with ultrasonic energy, the diffusion rate may increase. For example, the diffusion coefficient increases with a factor 10 per 10 °C increase, wherein said temperature increase was in the range of 15 °C to 65 °C.

Therefore, in a preferred embodiment, the solvent comprises the characteristics of Ra-distance in the abovementioned range, wherein said Ra-distance is reached in the range of 30 °C to 50 °C, and wherein the solvent has a high molecular weight and boiling point above 150 °C. Preferably, the molecular weight of the solvent is in the range of 50 g mol⁻¹ to 500 g mol⁻¹, preferably in the range of 100 g mol⁻¹ to 400 g mol⁻¹.

In a preferred embodiment according to the invention, the solvent is linear and/or planar.

It is noted that planar refers to a molecule of the solvent.

An advantage of a linear solvent is that said solvent may adapt efficiently and effectively to the polymer of the polymeric component. As a result, efficient and effective lamination of at least two polymeric components is achieved.

Yet another advantage of a solvent comprising or consisting of linear and/or planar molecules is that said molecules are less sterically hindered compared to molecules which are not linear and/or planar. For example, said solvent molecules are less sterically hindered by the polymers of at least one of the polymeric components.

In a presently preferred embodiment according to the invention, the solvent has a Ra-distance in the range of 4 MPa^{1/2} to 9 MPa^{1/2}, preferably in the range of 5 MPa^{1/2} to 9 MPa^{1/2}, more preferably in the range of 5 MPa^{1/2} to 8 MPa^{1/2}.

It was found that a Ra-distance in the range of 4 MPa^{1/2} to 9 MPa^{1/2}, preferably in the range of 5 MPa^{1/2} to 9 MPa^{1/2}, more preferably in the range of 5 MPa^{1/2} to 8 MPa^{1/2} provides an efficient lamination of the at least two polymeric components.

In a further presently preferred embodiment according to the invention, the method further comprises the step of positioning the at least two polymeric components such that one of the at least one connecting surface of the first polymeric component faces one of the at least one connecting surface of the second polymeric component.

The step of positioning the at least two polymeric components such that one of the at least one connecting surface of the first polymeric component faces one of the at least one connecting surface of the second polymeric component enables aligning the at least two polymeric components, such that the desired shape of the bonded/combined polymeric components is achieved. Said step therefore reduces defective bonded/combined polymeric components.

It is noted that the margin for errors may be very small. For example, the margin for errors may be at most 100 µm, preferably at most 50 µm, more preferably at most 10 µm.

In a preferred embodiment, the solvent may be one or more selected from the group of fatty acids, ketones, alkanes, carboxylic acid esters, benzenes, preferably one or more selected from the group of selected from the group of isopropyl myristate, methyl myristate, methyl oleate, methyl laurate, acetone, butan-2-one, acetophenone, hexane, heptane, octane, ethyl acetate, xylene, cyclohexane.

In a further presently preferred embodiment according to the invention, the solvent may be one or more selected from the group of fatty acids, ketones, alkanes, carboxylic acid esters, benzenes, preferably one or more selected from the group of isopropyl myristate, methyl myristate, diethyl butanedioate, propylene carbonate, methyl oleate, methyl laurate, acetone, butan-2-one, acetophenone, hexane, heptane, octane, ethyl acetate, xylene, cyclohexane, more preferably one or more selected from the group of isopropyl myristate, methyl myristate, diethyl butanedioate, propylene carbonate, methyl oleate, methyl laurate, acetophenone, xylene.

It was found that one or more solvent selected from the group of fatty acids, ketones, alkanes, carboxylic acid esters, benzenes, preferably one or more selected from the group of isopropyl myristate, methyl myristate, diethyl butanedioate, propylene carbonate, methyl oleate, methyl laurate, acetone, butan-2-one, acetophenone, hexane, heptane, octane, ethyl acetate, xylene, cyclohexane, more preferably one or more selected from the group of isopropyl myristate, methyl myristate, diethyl butanedioate, propylene carbonate, methyl oleate, methyl laurate, acetophenone, xylene, provides the desired Ra-distance for different polymers. As result, efficient and effective bonding of the at least two polymeric components is achieved.

Furthermore, the solvent may be applied to one or more of the connecting surfaces. In addition, the step of providing a solvent may include providing different solvents to the different connecting surfaces. Alternatively, multiple solvents may be applied in a predetermined order to at least one of the connecting surface and/or a mixture of solvents may be applied to at least one of the connecting surfaces.

An advantage of the solvent being one or more selected from the group of isopropyl myristate, methyl myristate, diethyl butanedioate, propylene carbonate, methyl oleate, methyl laurate, acetophenone, xylene, is that said solvents are not toxic, or less toxic compared to for example octane and cyclohaxane. Furthermore, it was found that said solvents comprise a boiling point which enables efficient lamination of at least two polymeric components.

As a result, the method according to the invention is harmless regarding the solvent. Therefore, fewer safety precautions are needed to perform the method according to the invention.

In a preferred embodiment, the solvent comprises one or two aliphatic chains, wherein said chains comprise 2 to 25 carbon atoms.

An advantage of a solvent comprising one or two aliphatic chains, wherein said chains comprise 2 to 25 carbon atoms is that said solvents are flexible and are not sterically hindered to interact with at least one of the polymeric components. In addition, such solvent has an elevated boiling point, which will therefore not vaporize before the at least two polymeric components are laminated. As a result, an efficient, effective, and controlled lamination of the at least two polymeric components is achieved.

It was found that one or two aliphatic chains, wherein said chains comprise 2 to 25 carbon atoms enable efficient and effective lamination of the at least two polymeric components. Furthermore, such solvent is enabled to penetrate the polymeric component efficiently such that at least one surface of one of the at least two polymeric components soften.

In a preferred embodiment, the solvent is not acetonitrile.

It was found that the vapour pressure of acetonitrile is not sufficient. Thus, acetonitrile is too volatile to provide a thin and accurate layer of the solvent such that the desired (accurate) lamination of the at least two polymeric components is achieved.

In a further presently preferred embodiment according to the invention, the step of providing a solvent comprises the step of applying the solvent by rolling and/or the step of applying the solvent by drop depositing. Preferably, the drop depositing comprises spin coating and/or microdispensing.

An advantage of the step of providing a solvent is that the solvent is applied accurately, both in its quantity as well as in location. As a result, the solvent is applied to locations which will be bonded. Providing the solvent in the desired quantity enables a substantially completely bonded surface. For example, a quantity of solvent may be applied in the range of 1 nanolitre per mm⁻² to 500 nanolitre per mm⁻², preferably in the range of 10 nanolitre per mm⁻² to 400 nanolitre per mm⁻², more preferably in the range of 50 nanolitre per mm⁻² to 300 nanolitre per mm⁻², even more preferably in the range of 75 nanolitre per mm⁻² to 150 nanolitre per mm⁻².

Alternatively, a quantity of solvent may be applied in the range of 1 nanolitre per mm⁻² to 150 nanolitre per mm⁻², preferably in the range of 1 nanolitre per mm⁻² to 100 nanolitre per mm⁻², more preferably in the range of 1 nanolitre per mm⁻² to 50 nanolitre per mm⁻², even more preferably in the range of 1 nanolitre per mm⁻² to 10 nanolitre per mm⁻², most preferably in the range of 2 nanolitre per mm⁻² to 5 nanolitre per mm⁻².

For example, the step of providing a solvent may be performed using inkjet printing. It was found that inkjet printing enables to accurately apply the desired amount to the at least one connecting surface.

Alternatively, the step of providing a solvent may be performed using micropatterned rollers (micropatterned rollers are also referred to as anilox rollers). These rollers comprise evenly distributed holes, grooves, and/or other structures that are filled through capillary action. Upon contact with the at least one connecting surface (polymer), part of the solvent will be transferred onto the at least one connecting surface. An advantage is that the solvent will be deposited on all areas that are on the same height, thus if the product comprises areas that should not be provided with solvent and thus not be bonded, are not provided with solvent because said areas are lower in height compared to the area's solvent is deposited on.

An advantage of drop depositing is that microdroplets may be deposited on a surface. Said drop depositing enables to provide droplets of solvent to at least one of the at least one connecting surfaces in an accurate manner. For example, the diameter and/or volume of said droplets have a narrow deviation.

In a further presently preferred embodiment according to the invention, the solvent may be a biobased solvent.

An advantage of a biobased solvent is that the environmental impact is reduced compared to conventional methods for laminating at least two polymeric components.

Furthermore, said biobased solvent enables to reduce the environmental impact of microfluidic devices manufactured with the method according to the invention.

In a further presently preferred embodiment according to the invention, the solvent has a boiling point of at least 100 °C, preferably at least 120 °C, more preferably at least 150 °C.

It was found that a solvent comprising a boiling point of at least 100 °C, preferably at least 120 °C, more preferably at least 150 °C, enables efficient and effective laminating of at least two polymeric components. In particular, this enables an efficient and effective manufacturing of a microfluidic device.

In a further presently preferred embodiment according to the invention, further comprises the step of manufacturing a microfluidic device.

The method according to the invention enables efficient and effective manufacturing of a microfluidic device.

In a further presently preferred embodiment according to the invention, the step of securing comprises providing at least one interstitial space between the secured opposed surfaces. Preferably, the at least one interstitial space is one or more selected from the group of a microfluidic channel, a micro-pneumatic channel, a microfluidic valve seat, a microfluidic reservoir or reactor, a cell culture chamber.

Providing at least one interstitial space between the secured opposed surfaces enables to achieve bonded/combined polymeric compounds which may be used to receive liquids, cell cultures, and the like. Thus, the interstitial space may be used to perform controlled reactions and the like.

In a further presently preferred embodiment according to the invention, the step of applying ultrasonic energy induces a temperature of at most the lowest glass transition temperature of the at least two polymeric components.

An advantage of inducing a temperature due to ultrasonic welding of at most the lowest glass transition temperature of the at least two polymeric components is that the degradation of the bonded/combined polymeric compounds is reduced to a minimum as the materials are exposed to less stress. Therefore, failure of the desired bonded/combined polymeric components is reduced. This provides a method which is more economical compared to conventional methods.

In a further presently preferred embodiment according to the invention, the step of applying ultrasonic energy comprises the step of applying ultrasonic welding and/or ultrasonic laminating.

It was found that ultrasonic welding and/or ultrasonic laminating is, in particular, efficient and effective for laminating the at least to polymeric components.

In a further presently preferred embodiment according to the invention, the step of securing comprises applying a pressure in the range of 0.05 MPa to 5 MPa, preferably in the range of 0.1 MPa to 4 MPa, more preferably in the range of 0.2 MPa to 3 MPa, most preferably in the range of 0.3 MPa to 1.5 MPa.

Applying a pressure in the abovementioned range enables efficient and effective bonding/combining of the at least two polymeric components. Said pressure reduces and/or prevents damage of the polymeric components, particularly the connecting surfaces including the at least one connecting surface the solvent is provided to.

Furthermore, the at least two polymeric components are secured and ultrasonic energy is applied to realize the bond between the at least two polymeric components. After the bond formation, the stack of parts may remain clamped, such that the interface layer can (fully) solidify.

The first step of this cycle is securing of the part, for example using clamping, in a pressure range of 0.05 MPa to 5 MPa. It was found that the lower end of this spectrum may allow the parts to move laterally, thus reducing alignment accuracy. Higher range, more specifically above 1.5 MPa results in longer process times. Therefore, the pressure is preferably applied in the range of 0.3 MPa to 1.5 MPa.

The pressure may be applied with pneumatic or electric actuators. Preferably, electric actuators are used, because these allow a more accurate movement to be achieved.

An advantage of the method according to the invention is that the at least two polymeric components are bonded with a compression-free bond. In addition, a backlash-free brake may be employed so that during the step of applying ultrasonic energy the (desired) product of bonded/combined polymeric components can neither be compressed, nor expanded.

The pressure may be applied and ultrasonic energy is only applied after the target pressure is realized. After the ultrasonic welding, the bonding pressure may be maintained such that the bond interface can cool down and solidify.

In a preferred embodiment, the ultrasonic energy may be applied using a multitude of actuators, wherein the actuators are configured for plastic welding and operate in a range of 15 kHz to 40 MHz. It is noted that lower frequencies are more suitable for larger footprint (up to 300 x 300 mm) and coarse microstructures, while higher operating frequencies are better for small footprint products with fine microstructures or nanostructures. Typical durations for the application of ultrasonic energy are in the order of 0.1seconds to 30 seconds, preferably 0.2 second to 30 seconds, more preferably 0.2 seconds to 5 seconds, even more preferably 0.2 seconds to 3 seconds.

In a further presently preferred embodiment according to the invention, at least one of the at least two polymeric components is a non-elastomeric component, preferably wherein at least one of the at least two polymeric components is a thermoplastic polymer component.

In a further presently preferred embodiment according to the invention, the at least two polymeric components are independently made of one or more selected from the group of cyclic olefin copolymer, polystyrene, polyacrylate, polycarbonate. Preferably, the at least two polymeric components are independently made of one or more selected from the group of cyclic olefin copolymer, polystyrene, poly(methyl methacrylate), polycarbonate, polyethylene terephthalate, poly(oxyethyleneoxyterephthaloyl), poly(ethylene terephthalate glycol), polypropylene, poly(1-methylethylene).

It was found that polymeric components comprising one or more of the abovementioned polymers enables efficient and effective bonding of the at least two polymeric components.

In a further presently preferred embodiment according to the invention, the step of providing a solvent further comprises at least partially intruding, by the solvent, into the at least one connecting surface of the at least two polymeric components, and preferably comprising, by the at least partially intruding, swelling of the at least one connecting surface of the at least two polymeric components.

At least partially intruding, by solvent, into the at least one connecting surface of the at least two polymeric components enable to form an interface layer (also referred to as intermediate layer).

In a further presently preferred embodiment according to the invention, the step of applying ultrasonic energy may be performed in a substantially perpendicular direction on an edge between the connecting surface of a first polymeric component and the connecting surface of a second polymeric component.

It is noted that the step of applying ultrasonic energy performed in a substantially perpendicular direction includes applying ultrasonic energy such that the amplitude of the ultrasonic energy is applied in a substantially perpendicular direction.

The invention also relates to a method for manufacturing a microfluidic device, comprising the method for laminating at least two polymeric components according to the invention.

The method for manufacturing a microfluidic device provides the same effects and advantages as those described for the method for laminating at least two polymeric components according to the invention.

The invention also relates to a device for laminating at least two polymeric components as defined in claim 14.

The device for laminating at least two polymeric components provides the same effects and advantages as those described for the method for laminating at least two polymeric components according to the invention.

In a preferred embodiment, the ultrasonic energy may be applied using a multitude of actuators, wherein the actuators are configured for plastic welding and operate in a range of 15 kHz to 40 MHz. It is noted that lower frequencies are more suitable for larger footprint (up to 300 mm x 300 mm) and coarse microstructures, while higher operating frequencies are better for small footprint products with fine microstructures or nanostructures. Typical durations for the application of ultrasonic energy are in the order of 0.1seconds to 30 seconds, preferably 0.5 seconds to 5 seconds.

In a presently preferred embodiment according to the invention, the means to provide a solvent are an inkjet device and/or rolling device.

In a further presently preferred embodiment according to the invention, the rolling device is a micropatterned roller.

In a further presently preferred embodiment according to the invention, the means to provide ultrasonic energy comprises an ultrasonic stack, wherein the ultrasonic stack comprises a piezoelectric transducer and a sonotrode/horn.

In a further presently preferred embodiment according to the invention, the means to provide ultrasonic energy comprises a surface-acoustic-wave device.

The invention also relates to a microfluidic device obtainable by the method according to the invention.

The microfluidic device provides the same effects and advantages as those described for the method for laminating at least two polymeric components according to the invention, and device for laminating at least two polymeric components according to the invention.

Further advantages, features and details of the invention are elucidated on the basis of preferred embodiments thereof, wherein reference is made to the accompanying drawings, in which:
- Figure 1 shows a schematic overview of the method according to the invention;
- Figure 2 shows inkjet printing of solvents according to the invention;
- Figure 3 shows rolling of solvents according to the invention;
- Figure 4 shows a pressurized chip, also referred to as secured product, obtained by the method according to the invention;
- Figure 5 shows ultrasonic welding of a chip obtained by the method according to the invention;
- Figure 6 shows SAW welding of a chip obtained by the method according to the invention; and
- Figures 7A and 7B shows a schematic overview of a microfluidic chip manufactured with the method according to the invention.

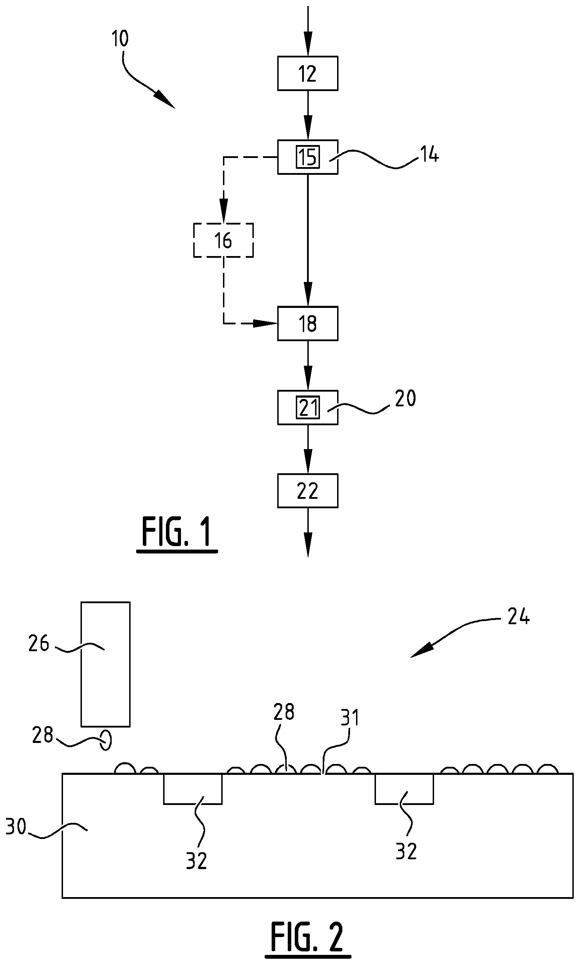

Method 10 (Figure 1) for laminating at least two polymeric components, follows a sequence of steps.

In the illustrated embodiment method 10 may start with step 12 of providing at least two polymeric components, each component having at least one connecting surface. Step 12 may be followed by step 14 of providing a solvent to at least one of the at least one connecting surfaces. Said step 14 may include step 15 of applying the solvent by rolling and/or the step of applying the solvent by drop depositing.

Step 14 may be followed by step 18 of securing the connecting surface of a first polymeric component to the connecting surface of a second polymeric component. In this example, the connecting surface of the first polymeric component is provided with the solvent. Alternatively, step 14 may be followed by step 16 of positioning the at least two polymeric components such that one of the at least one connecting surface of the first polymeric component faces one of the at least one connecting surface of the second polymeric component. Step 16 may than be followed by step 18.

Furthermore, step 18 may be followed by step 20 of applying ultrasonic energy. Step 20 may include step 21 of applying ultrasonic welding and/or ultrasonic laminating. Finally, step 20 may be followed by step 22 of bonding the connecting surfaces of the first and second polymeric component.

Inkjet printing 24 of solvents (Figure 2) comprises inkjet printhead 26 which is configured to deposit droplets 28 comprising the solvent of different sizes onto polymeric component 30. Polymeric component 30 comprises connecting surface 31 and interstitial spaces 32. The droplets near interstitial spaces 32 may be smaller and adjusted to the dimensions of interstitial spaces 32 to prevent spillover into interstitial spaces 32.

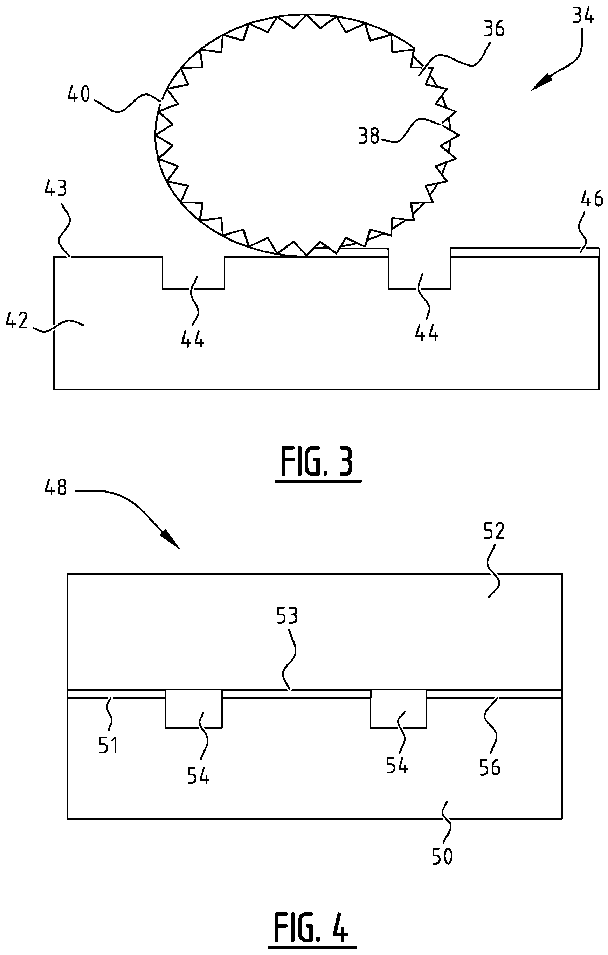

Rolling 34 (Figure 3) comprises roller 36 which has fine-structured outer surface 38. Fine-structured outer surface 38 may be filled with solvent 40, for example using capillary forces. Solvent 40 may be applied to polymeric component 42. Polymeric component 42 comprises connecting surface 43 and interstitial spaces 44. Solvent 40 may form together with polymeric component 42 interface layer 46 on polymeric component 42. Preferably, solvent 40 is applied to the areas of polymeric component 42 which will be bonded.

Secured product, also referred to as pressurized chip, 48 (Figure 4) comprises polymeric component 50 and polymeric component 52. Polymeric components 50 and 52 may encapsulate interstitial spaces 54. Furthermore, polymeric component 50 comprises connecting surface 51 and polymeric component 52 comprises connecting surface 53. Before bonding, interface layer 56 may be present. Thus, interface layer 56 may comprise the solvent.

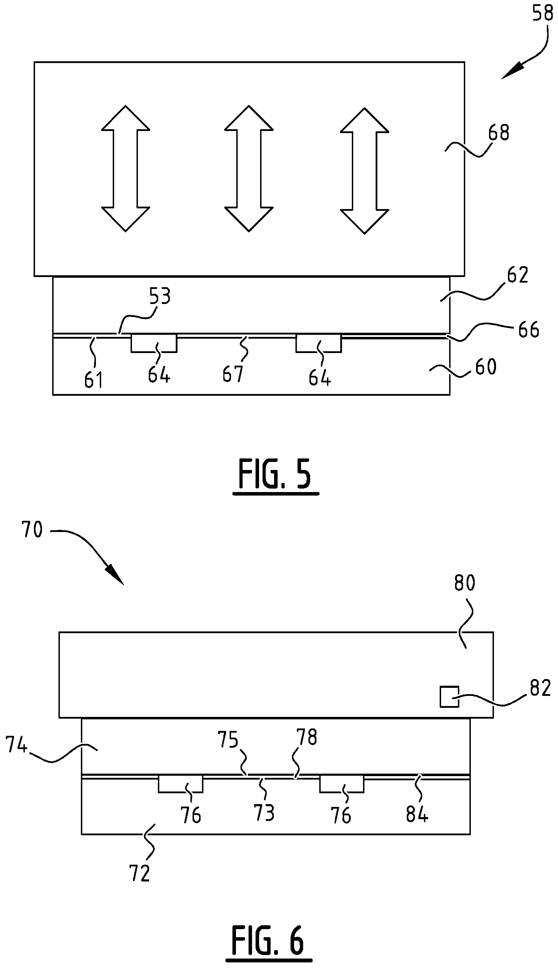

Ultrasonic welding chip 58 (Figure 5) comprises polymeric components 60 and 62, wherein polymeric components 60 and 62 encapsulate interstitial spaces 64. Polymeric component 60 comprises connecting surface 61, and polymeric component 62 comprises connecting surface 63.

Furthermore, polymeric components 60 and 62 are, before bonding, separated by interface layer 66. Ultrasonic welding means 68 are configured to provide ultrasonic energy in a substantially perpendicular direction of interface layer 66 to weld surface 67. Weld surface 67 may initially be formed by connecting surface 61, and/or connecting surface 63, and/or interface layer 66.

Surface-acoustic-wave (SAW) device welding 70 (Figure 6) comprises polymeric components 72 and 74, wherein polymeric components 72 and 74 encapsulate interstitial spaces 76. Polymeric component 72 comprises connecting surface 73, and polymeric component 74 comprises connecting surface 75.

Furthermore, polymeric components 72 and 74 are, before bonding, separated by interface layer 78. Ultrasonic welding means 80 are configured to provide ultrasonic energy from SAW actuator 82 in a substantially perpendicular direction of interface layer 78 to weld surface 84. Weld surface 84 may initially be formed by connecting surface 73, and/or connecting surface 75, and/or interface layer 78.

In a first experiment, two poly(methyl methacrylate) (PMMA) polymeric components with a dimension of 30 mm x 30 mm and a thickness of 1.5 mm were used to manufacture a microfluidic chip. One of the two polymeric components remained unprocessed and was used as a flat cover component. The other of the two polymeric components was provided with a pattern by means of machining with a groove with a depth of 200 µm and a width of 1000 µm. Furthermore, an inlet and outlet were provided to the start and end of the groove respectively. Both polymeric components were cleaned with DI water and dried with clean air prior to further processing.

A solvent was carefully selected for PMMA, comprising ethyl acetate. For this solvent, the Ra-distance at 20 °C is about 8 MPa^{1/2}, while it reduces to about 5 MPa^{1/2} at 40 °C. As a negative control, heptane (Ra-distance of 13 MPa^{1/2}) and water (Ra-distance of 38 MPa^{1/2}) was used.

Solvents were applied to the polymeric component comprising the groove, by using a roller. The cover polymeric component was placed on top of the polymeric component with solvent. After, the multi-layer stack was placed under a custom-made ultrasonic machine. An electric actuator, comprising a ball-screw with a servo motor, was programmed to secure the ultrasonic actuator on top of the multi-layer stack until the target pressure of about 1.1 MPa was reached. Then, a brake on the servo motor is activated to lock the position of the ultrasonic actuator.

The ultrasonic actuator was activated for 1 second at 50% target amplitude of 12 micron. The system amplitude was designed to be 15 micron (at 100%). After ultrasonic actuation, the securing was maintained for an additional 3 seconds before removing the ultrasonic actuator from the multi-layer stack.

The bonding results were that a clear (optically-transparent) and uniform bond was realized with the solvent, while the two negative controls yielded no bond. With the negative controls the fluids remained liquids between the connecting surfaces and in effect the two part can be deattached without force.

In a further experiment the Ra-distance for various combinations of solvents and polymers have been determined.

It was found that bonding of cyclic olefin copolymer (COC) works well with isopropyl myristate (CAS 110-27-0). This combination has a Ra-distance of 4.6 MPa^{1/2}. Due to the low volatility, the solvent does not quickly evaporate and does not excessively swell prior to application. Therefore, a high quality bond is formed, as well as a practical solvent for accurate application of the liquid to the at least one connecting surface.

Furthermore, it was found that bonding of polystyrene polymeric components may be performed with 10 vol.% methyl ethyl ketone (CAS 78-93-3) in n-heptane (CAS 142-82-5), where the mixture has a Ra-distance of 7.6 MPa^{1/2} to the polystyrene polymeric component.

It was also found that bonding of polycarbonate works well with 40 vol.% methyl ethyl ketone (CAS 78-93-3) in n-heptane (CAS 142-82-5), where the mixture has a Ra-distance of 7.5 MPa^{1/2} to the polycarbonate polymeric component.

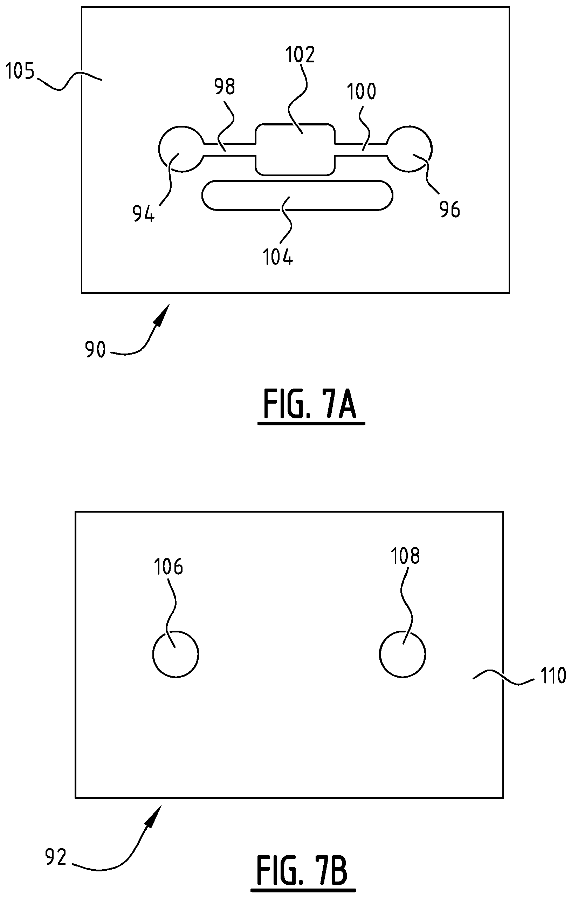

In a further experiment, microfluidic chips according to Figures 7A and 7B were manufactured. Figure 7A shows a design of microfluidic part 90 and Figure 7B shows a design of lid 92. Lid 92 is used to cover microfluidic part 90 to form a microfluidic device. Microfluidic part 90 comprises inlet 94, outlet 96, microfluidic channels 98 and 100, and microfluidic chamber 102. Microfluidic channels 98 is operatively coupled with inlet 94 and microfluidic chamber 102. Furthermore, microfluidic channel 100 is operatively coupled with outlet 96 and chamber 102. Furthermore, microfluidic part 90 comprises full-depth slot 104 and connecting surface 105.

Lid 92 comprises inlet 106 and outlet 108. Once laminated/assembled, inlet 94 and inlet 106, and outlet 96 and outlet 108 are aligned, such that said inlets and said outlets are operatively coupled with each other. Furthermore, lid 92 comprises connecting surface 110.

The method according to the invention enables to secure connecting surfaces 105 and 110 to each other.

In said experiment, microfluidic part 90 and lid 92 are made of a cyclic olefin copolymer (such as COC8007, which is a polymer copolymerised from norbornene and ethylene) or poly(methyl methacrylate) (PMMA).

Different solvents are applied to connecting surface 105 of microfluidic part 90.

Isopropyl myristate, which is a bio-based and non-toxic solvent, was applied to connecting surface 105 using a micropatterned roller of microfluidic part 90 made of cyclic olefin copolymer (COC8007). The roller deposited a layer of about 3 µm (or 3 nanolitre per square millimetre) on connecting surface 105 of microfluidic part 90. No solvent was observed inside inlet 94, outlet 96, microfluidic channels 98 and 100, microfluidic chamber 102, or full-depth slot 104.

Lid 92 was manually placed on microfluidic part 90, such that connecting surface 105 comprising solvent and connecting surface 110 were adjacent to each other, to form a microfluidic chip. Preferably, lid 92 and microfluidic part 90 are placed on top of each other before the solvent evaporates.

The microfluidic chip is exposed to ultrasonic energy, wherein said ultrasonic energy is applied in a weld cycle of 1 second weld time, 0.5 MPa, 20 kHz frequency, 12 µm amplitude, and holding for 3 second hold time, 0.5 MPa.

It was found that microfluidic part 90 made of a cyclic olefin copolymer (such as COC8007) has a Ra-distance of 4.6 with respect to isopropyl myristate.

Furthermore, it was found that the two polymeric components were successfully laminated and form the desired microfluidic chip successfully.

The formed microfluidic chip could resist a shear stress of at least 5.7 N mm⁻².

Furthermore, the microfluidic chip was optically transparent after performing the method according to the invention and it was found that said microfluidic chip was not cytotoxic (tested according to ISO 10993-5).

Alternatively, diethyl butanedionate (CAS nr. 123-25-1), which is a bio-based and non-toxic solvent was applied to connecting surface 105 using an inkjet printhead (Konica Minolta KM512) of microfluidic part 90 made of PMMA. A negative print image was used, to avoid solvent at undesired places (such as inlet 94, outlet 96, microfluidic channels 98 and 100, microfluidic chamber 102, or full-depth slot 104. This inkjet printhead deposited a layer of about 5 µm (or 5 nanolitre per square millimetre) on connecting surface 105 of microfluidic part 90. No solvent was observed inside inlet 94, outlet 96, microfluidic channels 98 and 100, microfluidic chamber 102, or full-depth slot 104.

Lid 92 was manually placed on microfluidic part 90, such that connecting surface 105 comprising solvent and connecting surface 110 were adjacent to each other, to form a microfluidic chip. Preferably, lid 92 and microfluidic part 90 are placed on top of each other before the solvent evaporates.

The microfluidic chip is exposed to ultrasonic energy, wherein said ultrasonic energy is applied in a weld cycle of 1 second weld time, 0.5 MPa, 20 kHz frequency, 12 µm amplitude, and holding for 3 second hold time, 0.5 MPa.

It was found that microfluidic part 90 made of PMMA has a Ra-distance of 7.0 with respect to diethyl butanedionate (CAS nr. 123-25-1).

Furthermore, it was found that the two polymeric components were successfully laminated and form the desired microfluidic chip successfully.

The formed microfluidic chip could resist a shear stress of at least 2.1 N mm⁻². An additional pressure burst test was performed. Leakage occurred at a pressure of 17.5 bar.

Furthermore, the microfluidic chip was optically transparent after performing the method according to the invention and it was found that said microfluidic chip was not cytotoxic (tested according to ISO 10993-5).

In a further experiment, different solvents were tested in the method according to the invention. The selected solvents are ethanol, acetone, or acetonitrile. It is noted that these solvents have a boiling point below 100 °C.

The at least two polymeric components (microfluidic part 90 and lid 92) were made of PMMA, cyclic olefin copolymer (such as COC8007), polystyrene, or polycarbonate. It was observed that application of a thin layer of the solvents ethanol, acetone, or acetonitrile to a connecting surface of at least one (microfluidic part) of the at least two polymeric components was unsuccessful.

Said solvents evaporated before the other of the at least two polymeric components (lid) is placed adjacent to the other polymeric component, or even before the solvent could be applied to a connecting surface.

Alternatively, the solvents were pipetted on a connecting surface of at least one of the at least two polymeric components. This resulted in a thick layer of solvent.

A connecting surface of a further polymeric component could be placed adjacent to the connecting surface comprising the solvent, such that a microfluidic chip could be formed. The two assembled polymeric components were exposed to ultrasonic energy using ultrasonic welding.

The ultrasonic energy is applied in an ultrasonic welding cycle of 1 second weld time, 0.5 MPa, 20 kHz frequency, and 12 µm amplitude, and 3 second hold time at 0.5 MPa.

It was found that ethanol, acetone, and acetonitrile did not provide the desired microfluidic chip made of cyclic olefin copolymer (such as COC8007).

It was also found that polymeric components made of PMMA could be laminated with the use of ethanol, acetone, and acetonitrile. A drawback is that the inlet, outlet, channels, and chamber of the microfluidic chip deformed due to the overload of solvent.

It was also found that polymeric parts made of polystyrene could be laminated using acetone. Ethanol and acetonitrile did not provide the desired lamination. In addition, the microfluidic chip obtained by laminating at least two polymeric components using acetone did damage the internal microfluidic chip design.

It was also found that polymeric parts made of polycarbonate did not provide the desired microfluidic chip. The thick layer of solvent damaged the internal space in the microfluidic chip.

Thus, applying a solvent with a boiling point above 100 °C is desired and applying said solvent in a thin and metered layer enables efficient and effective lamination of the at least two polymeric components.

The present invention is by no means limited to the above described preferred embodiments and/or experiments thereof. The scope of the present invention is defined by the appended claims.

## Claims

1. Method for laminating at least two polymeric components, comprising the steps of:
- providing at least two polymeric components (60, 62), each component having at least one connecting surface (61, 63);
- providing a solvent (28, 40) to at least one of the at least one connecting surface: (61, 63), wherein the solvent has a boiling point of at least 100 °C;
- securing the connecting surface of a first polymeric component (60) to the connecting surface of a second polymeric component (62), wherein the at least one connecting surface provided with the solvent is the connecting surface of the first polymeric component and/or the second polymeric component;
- applying ultrasonic energy (68); and
- bonding the connecting surfaces of the first polymeric component (60) and second polymeric component (62),
wherein the step of securing is performed before the solvent (28, 40) is substantially evaporated, and wherein the solvent has a Ra-distance with respect to the polymeric component in the range of 4 MPa^{1/2} to 10 Mpa^{1/2}.

2. Method according to claim 1, wherein the solvent has a Ra-distance in the range of 4 Mpa^{1/2} to 9 Mpa^{1/2}, preferably in the range of 5 Mpa^{1/2} to 9 Mpa^{1/2}, more preferably in the range of 5 Mpa^{1/2} to 8 Mpa^{1/2}.

3. Method according to any one of the preceding claims, further comprising the step of positioning the at least two polymeric components (60, 62) such that one of the at least one connecting surface (61) of the first polymeric component faces one of the at least one connecting surface (63) of the second polymeric component.

4. Method according to any one of the preceding claims, wherein the solvent is one or more selected from the group of fatty acids, ketones, alkanes, carboxylic acid esters, benzenes, preferably one or more selected from the group of isopropyl myristate, methyl myristate, diethyl butanedioate, propylene carbonate, methyl oleate, methyl laurate, acetone, butan-2-one, acetophenone, hexane, heptane, octane, ethyl acetate, xylene, cyclohexane, more preferably one or more selected from the group of isopropyl myristate, methyl myristate, diethyl butanedioate, propylene carbonate, methyl oleate, methyl laurate, acetophenone, xylene.

5. Method according to any one of the preceding claims, wherein the step of providing a solvent comprises the step of applying the solvent by rolling (34) and/or the step of applying the solvent by drop depositing (26).

6. Method according to any one of the preceding claims, wherein the solvent is a biobased solvent.

7. Method according to any one of the preceding claims, wherein the solvent has a boiling point of at least 120 °C, preferably at least 150 °C.

8. Method according to any one of the preceding claims, further comprising the step of manufacturing a microfluidic device (90).

9. Method according to any one of the preceding claims, wherein the step of securing comprises providing at least one interstitial space (64) between the secured opposed surfaces, preferably wherein the at least one interstitial space is one or more selected from the group of a microfluidic channel, a micro-pneumatic channel, a microfluidic valve seat, a microfluidic reservoir or reactor, a cell culture chamber.

10. Method according to any one of the preceding claims, wherein the step of applying ultrasonic energy (68) induces a temperature of at most the lowest glass transition temperature of the at least two polymeric components (60, 62), and/or wherein the step of applying ultrasonic energy comprises the step of applying ultrasonic welding and/or ultrasonic laminating.

11. Method according to any one of the preceding claims, wherein the step of securing comprises applying a pressure in the range of 0.05 MPa to 5 MPa, preferably in the range of 0.1 MPa to 4 MPa, more preferably in the range of 0.2 MPa to 3 MPa, most preferably in the range of 0.3 MPa to 1.5 MPa, and/or wherein at least one of the at least two polymeric components (60, 62) elastomeric component, preferably wherein at least one of the at least two polymeric components (60, 62) is a thermoplastic polymer component.

12. Method according to any one of the preceding claims, wherein the at least two polymeric components (60, 62) are independently made of one or more selected from the group of cyclic olefin copolymer, polystyrene, polyacrylate, polycarbonate, preferably wherein the at least two polymeric components are independently made of one or more selected from the group of cyclic olefin copolymer, polystyrene, poly(methyl methacrylate), polycarbonate, polyethylene terephthalate, poly(oxyethyleneoxyterephthaloyl), poly(ethylene terephthalate glycol), polypropylene, poly(1-methylethylene).

13. Method according to any one of the preceding claims, wherein the step of providing a solvent further comprises at least partially intruding, by the solvent, into the at least one connecting surface of the at least two polymeric components (60, 62), and preferably comprising, by the at least partially intruding, swelling of the at least one connecting surface (61, 63) of the at least two polymeric components, and/or wherein the step of applying ultrasonic energy is performed in a substantially perpendicular direction on an edge between the connecting surface of a first polymeric component and the connecting surface of a second polymeric component.

14. Device for laminating at least two polymeric components and configured for performing the method according to any one of the preceding claims, comprising:
- means to provide a solvent (28, 40) to at least one of opposed surfaces (61, 63) of at least two polymeric components (60, 62);
- means to bring the at least two polymeric components (60, 62) into contact:
- securing means, configured to secure the opposed and contacted surfaces; and
- means to provide ultrasonic energy (68) to the contacted polymeric components.

15. Device according to claim 14, wherein the means to provide a solvent are an inkjet device (26) and/or rolling device (34) , preferably wherein the rolling device is a micropatterned roller, and/or
wherein the means to provide ultrasonic energy (68) comprises an ultrasonic stack, wherein the ultrasonic stack comprises a piezoelectric transducer and a sonotrode/horn, and/or wherein the means to provide ultrasonic energy comprises a surface-acoustic-wave device.

## Patentansprüche

1. Verfahren zum Laminieren von mindestens zwei polymeren Komponenten, umfassend die Schritte:
- Bereitstellen von mindestens zwei polymeren Komponenten (60, 62); wobei jede Komponente mindestens eine Verbindungsoberfläche (61, 63) aufweist;
- Bereitstellen eines Lösungsmittels (28,40) an mindestens eine der mindestens einen Verbindungsoberfläche (61, 63), wobei das Lösungsmittel einen Siedepunkt von mindestens 100 °C aufweist;
- Befestigen der Verbindungsoberfläche einer ersten polymeren Komponente (60) an der Verbindungsoberfläche einer zweiten polymeren Komponente (62), wobei die mindestens eine Verbindungsoberfläche, die mit dem Lösungsmittel bereitgestellt ist, die Verbindungsoberfläche der ersten polymeren Komponente und/oder der zweiten polymeren Komponente ist;
- Anwenden von Ultraschallenergie (68); und
- Bonden der Verbindungsoberflächen der ersten polymeren Komponente (60) und der zweiten polymeren Komponente (62),
wobei der Schritt des Befestigens durchgeführt wird, bevor das Lösungsmittel (28, 40) im Wesentlichen verdampft ist.
und wobei das Lösungsmittel einen Ra-Abstand in Bezug auf die polymere Komponente in dem Bereich von 4 MPa^{1/2} bis 10 Mpa^{1/2} aufweist.

2. Verfahren nach Anspruch 1, wobei das Lösungsmittel einen Ra-Abstand in dem Bereich von 4 Mpa^{1/2} bis 9 Mpa^{1/2}, vorzugsweise in dem Bereich von 5 Mpa^{1/2} bis 9 Mpa^{1/2}, mehr bevorzugt in dem Bereich von 5 Mpa^{1/2} bis 8 Mpa^{1/2}, aufweist.

3. Verfahren nach einem der vorstehenden Ansprüche, ferner umfassend den Schritt eines Positionierens der mindestens zwei polymeren Komponenten (60, 62), derart, dass eine der mindestens einen Verbindungsoberfläche (61) der ersten polymeren Komponente einer der mindestens einen Verbindungsoberfläche (63) der zweiten polymeren Komponente zugewandt ist.

4. Verfahren nach einem der vorstehenden Ansprüche, wobei das Lösungsmittel eines oder mehrere, ausgewählt aus der Gruppe von Fettsäuren, Ketonen, Alkanen, Carbonsäureestern, Benzolen, vorzugsweise eines oder mehrere, ausgewählt aus der Gruppe von Isopropylmyristat, Methylmyristat, Diethylbutandioat, Propylencarbonat, Methyloleat, Methyllaurat, Aceton, Butan-2-on, Acetophenon, Hexan, Heptan, Octan, Ethylacetat, Xylol, Cyclohexan, mehr bevorzugt eines oder mehrere, ausgewählt aus der Gruppe von Isopropylmyristat, Methylmyristat, Diethylbutandioat, Propylencarbonat, Methyloleat, Methyllaurat, Acetophenon, Xylol, ist.

5. Verfahren nach einem der vorstehenden Ansprüche, wobei der Schritt des Bereitstellens eines Lösungsmittels den Schritt eines Anwendens des Lösungsmittels durch Walzen (34) und/oder den Schritt des Anwendens des Lösungsmittels durch tropfenweises Auftragen (26) umfasst.

6. Verfahren nach einem der vorstehenden Ansprüche, wobei das Lösungsmittel ein biobasiertes Lösungsmittel ist.

7. Verfahren nach einem der vorstehenden Ansprüche, wobei das Lösungsmittel einen Siedepunkt von mindestens 120 °C, vorzugsweise mindestens 150 °C, aufweist.

8. Verfahren nach einem der vorstehenden Ansprüche, ferner umfassend den Schritt eines Anfertigens einer mikrofluidischen Vorrichtung (90).

9. Verfahren nach einem der vorstehenden Ansprüche, wobei der Schritt des Befestigens das Bereitstellen mindestens eines Zwischenraums (64) zwischen den befestigten gegenüberliegenden Oberflächen umfasst, vorzugsweise wobei der mindestens eine Zwischenraum eines oder mehrere ist, ausgewählt aus der Gruppe von einem mikrofluidischen Kanal, einem mikropneumatischen Kanal, einem mikrofluidischen Ventilsitz, einem mikrofluidischen Reservoir oder Reaktor, einer Zellkulturkammer.

10. Verfahren nach einem der vorstehenden Ansprüche, wobei der Schritt des Anwendens von Ultraschallenergie (68) eine Temperatur von höchstens der niedrigsten Glasübergangstemperatur der mindestens zwei polymeren Komponenten (60, 62) induziert; und/oder wobei der Schritt des Anwendens von Ultraschallenergie den Schritt des Anwendens von Ultraschallschweißen und/oder Ultraschalllaminieren umfasst.

11. Verfahren nach einem der vorstehenden Ansprüche, wobei der Schritt des Befestigens das Anwenden eines Drucks in dem Bereich von 0,05 MPa bis 5 MPa, vorzugsweise in dem Bereich von 0,1 MPa bis 4 MPa, mehr bevorzugt in dem Bereich von 0,2 MPa bis 3 MPa, am meisten bevorzugt in dem Bereich von 0,3 MPa bis 1,5 MPa, umfasst, und/oder wobei mindestens eine der mindestens zwei polymeren Komponenten (60, 62) eine nicht-elastomere Komponente ist, vorzugsweise wobei mindestens eine der mindestens zwei polymeren Komponenten (60, 62) eine thermoplastische Polymerkomponente ist.

12. Verfahren nach einem der vorstehenden Ansprüche, wobei die mindestens zwei polymeren Komponenten (60, 62) aus einem oder mehreren, ausgewählt aus der Gruppe von zyklischem Olefin-Copolymer, Polystyrol, Polyacrylat, Polycarbonat, unabhängig voneinander hergestellt sind, vorzugsweise wobei die mindestens zwei polymeren Komponenten aus einem oder mehreren, ausgewählt aus der Gruppe von zyklischem Olefin-Copolymer, Polystyrol, Poly(methylmethacrylat), Polycarbonat, Polyethylenterephthalat, Poly(oxyethylenoxyterephthaloyl), Poly(ethylenterephthalatglykol), Polypropylen, Poly(1-methylethylen), unabhängig voneinander hergestellt sind.

13. Verfahren nach einem der vorstehenden Ansprüche, wobei der Schritt des Bereitstellens eines Lösungsmittels ferner ein mindestens teilweises Eindringen durch das Lösungsmittel in die mindestens eine Verbindungsoberfläche der mindestens zwei polymeren Komponenten (60, 62) umfasst, und vorzugsweise umfassend, durch das mindestens teilweise Eindringen, ein Quellen der mindestens einen Verbindungsoberfläche (61, 63) der mindestens zwei polymeren Komponenten, und/oder wobei der Schritt des Anwendens von Ultraschallenergie in einer im Wesentlichen senkrechten Richtung auf einen Rand zwischen der Verbindungsoberfläche einer ersten polymeren Komponente und der Verbindungsoberfläche einer zweiten polymeren Komponente durchgeführt wird.

14. Vorrichtung zum Laminieren von mindestens zwei polymeren Komponenten, und die zum Durchführen des Verfahrens nach einem der vorstehenden Ansprüche konfiguriert ist, umfassend:
- ein Mittel, um ein Lösungsmittel (28,40) an mindestens eine von gegenüberliegenden Oberflächen (61, 63) von mindestens zwei polymeren Komponenten (60, 62) bereitzustellen;
- ein Mittel, um die mindestens zwei polymeren Komponenten (60, 62) in Berührung zu bringen;
- ein Befestigungsmittel, das konfiguriert ist, um die gegenüberliegenden und in Berührung gebrachten Oberflächen zu befestigen; und
- ein Mittel, um Ultraschallenergie (68) an die in Berührung gebrachten polymeren Komponenten bereitzustellen.

15. Vorrichtung nach Anspruch 14, wobei die Mittel, um ein Lösungsmittel bereitzustellen, eine Tintenstrahlvorrichtung (26) und/oder Walzvorrichtung (34) sind, vorzugsweise wobei die Walzvorrichtung eine mikrostrukturierte Walze ist, und/oder wobei das Mittel, um Ultraschallenergie (68) bereitzustellen, einen Ultraschallstapel umfasst, wobei der Ultraschallstapel einen piezoelektrischen Wandler und eine Sonotrode/ein Horn umfasst, und/oder wobei das Mittel, um Ultraschallenergie bereitzustellen, eine akustische Oberflächenwellenvorrichtung umfasst.

## Revendications

1. Procédé permettant de stratifier au moins deux composants polymères, comprenant les étapes consistant à :
- fournir au moins deux composants polymères (60, 62) ; chaque composant ayant au moins une surface de liaison (61, 63) ;
- fournir un solvant (28, 40) à au moins l'une parmi ladite au moins une surface de liaison (61, 63), dans lequel le solvant a un point d'ébullition d'au moins 100 °C ;
- fixer la surface de liaison d'un premier composant polymère (60) à la surface de liaison d'un deuxième composant polymère (62), dans lequel l'au moins une surface de liaison pourvue du solvant est la surface de liaison du premier composant polymère et/ou du deuxième composant polymère ;
- appliquer de l'énergie ultrasonore (68) ; et
- lier les surfaces de liaison du premier composant polymère (60) et du deuxième composant polymère (62),
dans lequel l'étape consistant à fixer est mise en œuvre avant que le solvant (28, 40) ne soit sensiblement évaporé,
et dans lequel le solvant a une distance Ra par rapport au composant polymère dans la plage de 4 MPa^{1/2} à 10 MPa^{1/2}.

2. Procédé selon la revendication 1, dans lequel le solvant a une distance Ra dans la plage de 4 MPa^{1/2} à 9 MPa^{1/2}, de préférence dans la plage de 5 MPa^{1/2} à 9 MPa^{1/2}, plus préférablement dans la plage de 5 MPa^{1/2} à 8 MPa^{1/2}.

3. Procédé selon l'une quelconque des revendications précédentes, comprenant en outre l'étape consistant à positionner les au moins deux composants polymères (60, 62) de telle sorte que l'une parmi l'au moins une surface de liaison (61) du premier composant polymère soit en regard de l'une parmi l'au moins une surface de liaison (63) du deuxième composant polymère.

4. Procédé selon l'une quelconque des revendications précédentes, dans lequel le solvant est l'un ou plusieurs choisis parmi le groupe des acides gras, des cétones, des alcanes, des esters d'acide carboxylique, des benzènes, de préférence l'un ou plusieurs choisis parmi le groupe du myristate d'isopropyle, du myristate de méthyle, du butanedioate de diéthyle, du carbonate de propylène, de l'oléate de méthyle, du laurate de méthyle, de l'acétone, du butan-2-one, de l'acétophénone, de l'hexane, de l'heptane, de l'octane, de l'acétate d'éthyle, du xylène, du cyclohexane, plus préférablement l'un ou plusieurs choisis parmi le groupe du myristate d'isopropyle, du myristate de méthyle, du butanedioate de diéthyle, du carbonate de propylène, de l'oléate de méthyle, du laurate de méthyle, de l'acétophénone, du xylène.

5. Procédé selon l'une quelconque des revendications précédentes, dans lequel l'étape de fourniture d'un solvant comprend l'étape consistant à appliquer le solvant par rouleau (34) et/ou l'étape consistant à appliquer le solvant par dépôt de gouttes (26).

6. Procédé selon l'une quelconque des revendications précédentes, dans lequel le solvant est un solvant biosourcé.

7. Procédé selon l'une quelconque des revendications précédentes, dans lequel le solvant a un point d'ébullition d'au moins 120 °C, de préférence d'au moins 150 °C.

8. Procédé selon l'une quelconque des revendications précédentes, comprenant en outre l'étape consistant à fabriquer un dispositif microfluidique (90).

9. Procédé selon l'une quelconque des revendications précédentes, dans lequel l'étape de fixation comprend la fourniture d'au moins un espace interstitiel (64) entre les surfaces opposées fixées, de préférence dans lequel l'au moins un espace interstitiel est un ou plusieurs éléments choisis parmi le groupe constitué d'un canal microfluidique, d'un canal micropneumatique, d'un siège de soupape microfluidique, d'un réservoir ou réacteur microfluidique, d'une chambre de culture cellulaire.

10. Procédé selon l'une quelconque des revendications précédentes, dans lequel l'étape d'application d'énergie ultrasonore (68) provoque une température d'au plus la température de transition vitreuse la plus basse des au moins deux composants polymères (60, 62), et/ou dans lequel l'étape d'application d'énergie ultrasonore comprend l'étape d'application de soudage par ultrasons et/ou de stratification par ultrasons.

11. Procédé selon l'une quelconque des revendications précédentes, dans lequel l'étape de fixation comprend l'application d'une pression dans la plage de 0,05 MPa à 5 MPa, de préférence dans la plage de 0,1 MPa à 4 MPa, plus préférablement dans la plage de 0,2 MPa à 3 MPa, le plus préférablement dans la plage de 0,3 MPa à 1,5 MPa, et/ou dans lequel au moins l'un parmi les au moins deux composants polymères (60, 62) est un composant non élastomère, de préférence dans lequel au moins l'un parmi les au moins deux composants polymères (60, 62) est un composant polymère thermoplastique.

12. Procédé selon l'une quelconque des revendications précédentes, dans lequel les au moins deux composants polymères (60, 62) sont indépendamment constitués d'un ou plusieurs éléments choisis parmi le groupe d'un copolymère d'oléfine cyclique, d'un polystyrène, d'un polyacrylate, d'un polycarbonate, de préférence dans lequel les au moins deux composants polymères sont indépendamment constitués d'un ou plusieurs choisis dans le groupe d'un copolymère d'oléfine cyclique, d'un polystyrène, d'un poly(méthacrylate de méthyle), d'un polycarbonate, d'un téréphtalate de polyéthylène, d'un poly(oxyéthylèneoxytéréphtaloyle), d'un poly(téréphtalate d'éthylène glycol), d'un polypropylène, d'un poly(1-méthyléthylène).

13. Procédé selon l'une quelconque des revendications précédentes, dans lequel l'étape de fourniture d'un solvant comprend en outre l'intrusion au moins partielle, par le solvant, dans l'au moins une surface de liaison parmi les au moins deux composants polymères (60, 62), et comprenant de préférence, par l'intrusion au moins partielle, le gonflement de l'au moins une surface de liaison (61, 63) des au moins deux composants polymères, et/ou dans lequel l'étape d'application d'énergie ultrasonore est mise en œuvre dans une direction sensiblement perpendiculaire sur un bord entre la surface de liaison d'un premier composant polymère et la surface de liaison d'un deuxième composant polymère.

14. Dispositif permettant de stratifier au moins deux composants polymères et conçu pour mettre en œuvre le procédé selon l'une quelconque des revendications précédentes, comprenant :
- des moyens pour fournir un solvant (28, 40) à au moins l'une parmi des surfaces opposées (61, 63) d'au moins deux composants polymères (60, 62) ;
- des moyens pour mettre en contact les au moins deux composants polymères (60, 62) ;
- des moyens de fixation, conçus pour fixer les surfaces opposées et mises en contact ; et
- des moyens pour fournir de l'énergie ultrasonore (68) aux composants polymères mis en contact.

15. Dispositif selon la revendication 14, dans lequel les moyens pour fournir un solvant sont un dispositif à jet d'encre (26) et/ou un dispositif à rouleau (34), de préférence dans lequel le dispositif à rouleau est un rouleau à micromotifs, et/ou dans lequel les moyens pour fournir de l'énergie ultrasonore (68) comprennent une pile ultrasonore, dans lequel la pile ultrasonore comprend un transducteur piézoélectrique et une sonotrode/un cornet, et/ou dans lequel les moyens pour fournir de l'énergie ultrasonore comprennent un dispositif à ondes acoustiques de surface.
